# EUROPÄISCHE PATENTSCHRIFT

(11) **EP 3 294 794 B1**
(45) Veröffentlichungstag und Bekanntmachung des Hinweises auf die Patenterteilung: **24.11.2021**
(21) Anmeldenummer: 16732915.0
(22) Anmeldetag: 13.05.2016
(51) Int. Cl.: C08G 73/10

(54) **VERFAHREN ZUR HERSTELLUNG VON POLYIMIDEN**
PROCESS FOR PRODUCING POLYIMIDES
PROCÉDÉ DE PRÉPARATION DE POLYIMIDES

(30) Priorität: 13.05.2015 AT 3042015; 20.01.2016 AT 202016
(43) Veröffentlichungstag der Anmeldung: 21.03.2018
(73) Patentinhaber: Technische Universität Wien, 1040 Wien (AT)
(72) Erfinder: UNTERLASS, Miriam Margarethe, 1070 Wien (AT); BAUMGARTNER, Bettina, 1110 Wien (AT)
(74) Vertreter: Ellmeyer, Wolfgang
(86) Internationale Anmeldenummer: PCT/AT2016/050140
(87) Internationale Veröffentlichungsnummer: WO 2016/179625

(56) Entgegenhaltungen:
- RAPHAEL BRUNEL, CATHERINE MARESTIN, VINCENT MARTIN, REGIS MERCIER: "Water-borne Polyimides via Microwave assisted Polymerization", HIGH PERFORMANCE POLYMERS, Bd. 22, 2010, Seiten 82-94, XP9191379, DOI: 10.1177/0954008308101150
- BUU N. DAO, ANDREW M. GROTH, JONATHAN H. HODGKIN: "Microwave-Assisted Aqueous Polyimidization Using High-Throughput Techniques", MACROMOLECULAR RAPID COMMUNICATIONS, Bd. 28, Nr. 5, 2007, Seiten 604-607, XP002760852, DOI: 10.1002/marc.200600747 in der Anmeldung erwähnt

## Beschreibung

Die Erfindung betrifft die Herstellung von kristallinen Polyimiden mittels Solvothermalsynthese.

### STAND DER TECHNIK

Polyimide stellen wertvolle Werkstoffe für diverse Anwendungen dar. Ihre Synthese erfolgt in der Regel durch Polykondensation von Diaminen mit Dianhydriden in Lösung, in der Schmelze oder auch in festem Zustand. Überraschenderweise wurde vor einigen Jahren herausgefunden, dass - der Wasserabspaltung während der Kondensationsreaktion zum Trotz - sogar Wasser als Lösungsmittel für die Polyimidsynthese eingesetzt werden kann, wenn so genannte "hydrothermale Bedingungen" herrschen, worunter eine Reaktion unter Druck bei Temperaturen über 100 °C zu verstehen sind (siehe Hodgkin et al., "Water as a Polymerization Solvent-cyclization of Polyimides: Le Chatelier Confounded?", Polym. Prep. (American Chemical Society, Division of Polymer Chemistry) 41, 208 (2000), und WO 99/06470). Bei Verwendung anderer Lösungsmittel als Wasser wird bei Temperaturen oberhalb ihrer Siedepunkte von "solvothermalen Bedingungen" gesprochen.

Der Mechanismus dieser Kondensationsreaktion verläuft in zwei Stufen über die Bildung von Amidsäuren, die in der Folge eine Cyclodehydratisierung zu den entsprechenden Imiden erfahren. Dao et al. haben 1999 Faktoren, die die Imidierungsreaktion maßgeblich beeinflussen, untersucht (Dao, Hodgkin und Morton, "Important Factors Controlling Synthesis of Imides in Water", High Perform. Polym. 11, 205-218 (1999), "Dao 1999") und unter anderem festgestellt, dass die Produkte umso reiner anfallen, je höher die Temperatur der Imidierungsreaktion liegt.

Der Grund dafür, dass das Reaktionsgleichgewicht dieser unter Wasserabspaltung erfolgenden Zyklisierung selbst in Wasser als Lösungsmittel auf der Produktseite liegt, sind die veränderten Eigenschaften des Lösungsmittels unter solvothermalen Bedingungen. So verhält sich Wasser unter diesen Bedingungen etwa wie ein pseudo-organisches Lösungsmittel (Hodgkin et al., s.o.).

Weiters ist es üblich, vor der Polymerisation ein stöchiometrisches Salz aus Diamid und Dianhydrid zu bilden, was zumeist durch einfaches Vermischen der Monomere in Wasser und Abfiltrieren der in Wasser ausgefallenen Salze erfolgt. Dabei erfahren die Anhydride eine Hydrolyse zu den freien Tetracarbonsäuren, von denen je zwei Carboxylgruppen mit jeweils einer Aminogruppe ein Ammoniumsalz bilden (Unterlass et al., "Mechanistic study of hydrothermal synthesis of aromatic polyimides", Polym. Chem. 2011, 2, 1744). In den dabei erhaltenen Monomersalzen, die mitunter (in Analogie zur Polyamid- und insbesondere zur Nylonsynthese) als "AH-Salze" bezeichnet werden, liegen somit die beiden Monomere exakt im Molverhältnis 1:1 vor, weswegen deren anschließende Polymerisation zu sehr reinen Polyimiden führt. Nachstehend ist ein Beispiel für das Reaktionsschema zweier typischer aromatischer Monomere angeführt:

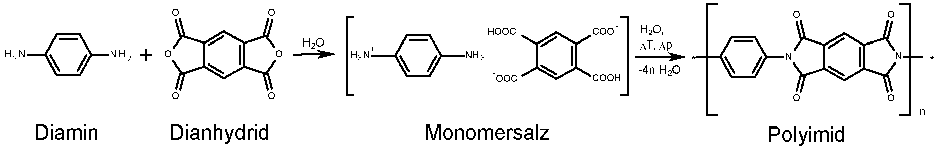

Eine weitere moderne Technologie, die seit einigen Jahren zur Synthese von organischen Verbindungen und neuerdings auch von Polyimiden Anwendung findet, ist Mikrowellenstrahlung, wodurch Reaktionszeiten deutlich verkürzt und die Selektivität von Reaktionen erhöht werden können (Lindstrom et al., "Microwave Assisted Organic Synthesis: a Review", Tetrahedron 57, 9225-9283 (2001); Perreux et al., "A Tentative Rationalization of Microwave Effects in Organic Synthesis According to the Reaction Medium, and Mechanistic Considerations", Tetrahedron 57, 9199-9223 (2001)). Auch zur Synthese von Polyimiden wurden Mikrowellen bereits eingesetzt (Lewis et al., "Accelerated Imidization Reactions using Microwave Radiation", J. Polym. Sci., Part A: Polym. Chem. 30, 1647-1653 (1992) und US 5.453.161).

Allerdings sind bislang nur zwei Berichte über eine Mikrowellen-unterstützte Hydrothermalsynthese von Polyimiden bekannt: Einerseits haben Dao et al. (Dao, Groth und Hodgkin, "Microwave-assisted Aqueous Polyimidization using High-throughput Techniques", Macromol. Rapid Commun. 28, 604-607 (2007); "Dao 2007") mittels Reihenversuchen mit einem ternären Monomerengemisch aus einem Diamin (4,4'-Oxydianilin, ODA) und zwei Dianhydriden (4,4'-(Hexafluorisopropyliden)diphthalsäu-reanhydrid, 6-FDA, Pyromellithsäuredianhydrid, PMDA) bei Temperaturen zwischen 120 °C und 200 °C festgestellt, dass die besten Ergebnisse bei 180-200 °C erzielbar sind, wenn das Ziel ein möglichst hohes Molekulargewicht der dabei erhaltenen statistischen (Block-)Copolymere der nachstehenden Formel ist:

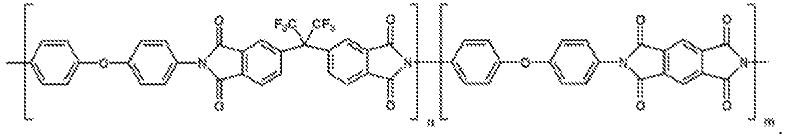

Und andererseits haben erst vor wenigen Jahren Brunel et al. (Brunel, Marestin, Martin und Mercier, "Water-borne Polyimides via Microwave-assisted Polymerization", High Perform. Polym. 22, 82-94 (2010)) anhand eines binären Polyimids aus ODA und 4,4'-(4,4'-Isopropylidendiphenoxy)bis(phthalsäureanhydrid) (Bisphenol A-Dianhydrid, BPADA) 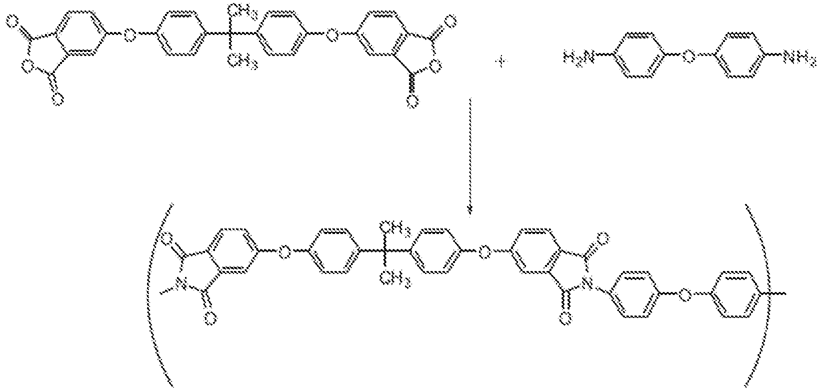 ein weiteres Mal bestätigt, dass durch Mikrowelleneinsatz die Reaktionszeiten erheblich, d.h. von 4 bis 12 h auf nur 5 bis 10 min verkürzt werden können. Die in dieser kurzen Zeit erzielten Umsätze sind allerdings mit nur etwa 20 % äußerst gering.

Bei beiden Mikrowellen-unterstützten Hydrothermalsynthesen von Polyimiden spielte zudem die Kristallinität der Produkte keine Rolle: In Dao 2007 (s.o.) finden sich zwar abgesehen vom Molekulargewicht und der Löslichkeit in organischen Lösungsmitteln keine sonstigen Angaben zur Beschaffenheit der erhaltenen Polyimide. Mit dem dort untersuchten ternären System konnte freilich gar kein kristallines Produkt erhalten werden - und wurde auch nicht angestrebt, da die hergestellten Polyimide im Hinblick auf eine Verwendung für Membranen untersucht wurden. Hierfür war gute Löslichkeit in organischen Lösungsmitteln das Ziel, um mittels solcher Lösungen Filme gießen zu können. Und Brunel et al. (s.o.) offenbaren (auf S. 89) explizit, dass durchwegs amorphe Produkte erhalten wurden. Da ihr Ziel ebenfalls (aus m-Kresol-Lösungen) gegossene Polyimidfilme waren, spielte die Kristallinität der Polyimide auch in diesem Fall keine Rolle.

Eine sehr junge Technologie ist die Herstellung kovalenter organischer Netzwerke ("covalent organic frameworks", COF), wozu mitunter großporige kristalline Polyimide eingesetzt werden können (Fang et al., "Designed synthesis of large-pore crystalline polyimide covalent organic frameworks", Nature Communications 5, 4503 (2014)). Für diese Zwecke sind freilich hochkristalline Polyimide vonnöten und amorphe Produkte oder solche mit hohen amorphen Anteilen völlig ungeeignet.

Ziel der Erfindung war vor diesem Hintergrund die Entwicklung eines wirtschaftlichen Verfahrens zur Herstellung möglichst reiner, hochkristalliner Polyimide.

### OFFENBARUNG DER ERFINDUNG

Dieses Ziel wird durch Bereitstellung eines Verfahrens zur Solvothermalsynthese von kristallinen Polyimiden durch Lösungspolymerisation von Monomeren in einem geeigneten Lösungsmittel durch Vermischen des Lösungsmittels und der Monomere und Erhitzen des Gemischs unter Druck auf Temperaturen über dem jeweiligen Siedepunkt bei Normaldruck erreicht, das dadurch gekennzeichnet ist, dass im Wesentlichen vollständig kristalline Polyimide hergestellt werden, indem
a) das Vermischen und Erhitzen des Lösungsmittels und der Monomere erfolgt, indem entweder
   a1) das Lösungsmittel auf solvothermale Bedingungen erhitzt wird, wonach erst die Monomere zugesetzt werden, um die Reaktion in Gang zu setzen, oder
   a2) die Monomere mit dem Lösungsmittel vermischt werden und das Gemisch innerhalb von 5 min auf solvothermale Bedingungen erhitzt wird, wobei die Reaktionstemperatur T_{R} während der Polymerisation unter der Polymerisationstemperatur oder der Polymerisationstemperatur T_{P} der Monomere in festem Zustand gehalten wird; und
b) die Lösungspolymerisation durchgeführt wird, bis im Wesentlichen vollständiger Umsatz erreicht wurde.

Dieses Verfahren beruht auf mehreren neuen Erkenntnissen der Erfinder:
- Erstens, dass die Kristallinität von mittels Solvothermal- und insbesondere Hydrothermalsynthese hergestellten Polyimiden umso höher ist, je geringer der Anteil an im Lösungsmittel gelösten Monomeren vor dem Erreichen der solvothermalen Bedingungen ist. Daher sind entweder die Monomere und das Lösungsmittel gemeinsam möglichst rasch auf solvothermale Bedingungen zu bringen, d.h. binnen 5 min, vorzugsweise binnen 3 min, noch bevorzugter binnen 2 min und insbesondere binnen nur 1 min, auf eine Temperatur über dem Siedepunkt des Lösungsmittels zu erhitzen. Oder das Lösungsmittel wird überhaupt getrennt von den Monomeren erhitzt, und Letztere werden erst zugegeben, sobald solvothermale Bedingungen vorliegen.
- Zweitens, dass beim gemeinsamen Erhitzen von Monomeren und Lösungsmittel die Reaktionstemperatur T_{R} unterhalb der Polymerisationstemperatur T_{P} der Monomere im festen Zustand, der beispielsweise mittels Thermogravimetrieanalyse (TGA) bestimmt werden kann, zu halten ist, da ansonsten ebenfalls die amorphen Anteile im Produkt zunehmen. Vorzugsweise wird daher im obigen Schritt a2) gemäß vorliegender Erfindung die Polymerisation bei einer Reaktionstemperatur T_{R} durchgeführt, die zumindest 5 °C, noch bevorzugter zumindest 10 °C, unter der T_{P} liegt, um möglichst vollständig kristalline Polyimide zu erhalten.
- Und drittens, dass bei getrenntem Erhitzen von Lösungsmittel und Monomeren und erst darauf folgendem Vermischen die Monomere durch das heiße Lösungsmittel derartig rasch erhitzt werden, dass für die Monomere praktisch keine Möglichkeit besteht, in Lösung zu gehen, bevor sie Reaktionstemperatur erreicht haben und die Polymerisation startet. In Schritt a1) des erfindungsgemäßen Verfahrens ist daher keine Limitierung der Reaktionstemperatur erforderlich.

Eine solche Limitierung der Reaktionstemperatur bei dem üblichen gemeinsamen Erhitzen gemäß Schritt a2) des erfindungsgemäßen Verfahrens steht freilich in diametralem Widerspruch zur anerkannten Lehre, wonach die Imidierungsreaktion bei möglichst hohen Temperaturen durchzuführen ist (Dao 1999, s.o.; Dao 2007, s.o.).

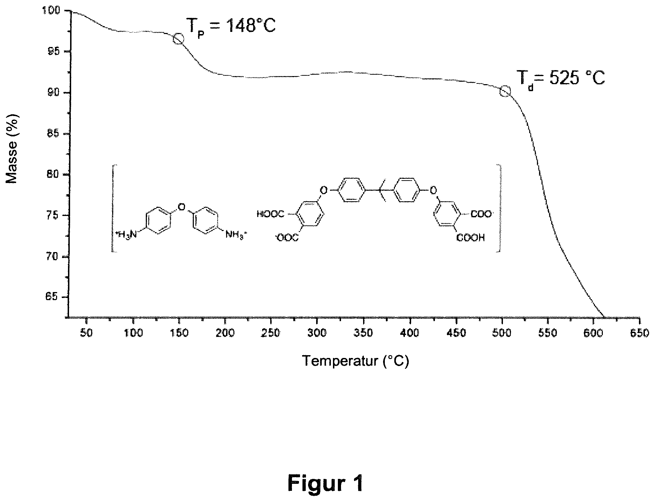

Zum Vergleich: Brunel et al. erhitzten zwar ihre Reaktionsgemische rasch mittels Mikrowellenstrahlung, wählten jedoch - gemäß der Lehre von Dao et al. - eine Reaktionstemperatur von 200 °C und erhielten durchwegs amorphe Produkte. Die vorliegenden Erfinder haben nun mittels TGA festgestellt (siehe Fig. 1), dass die T_{P} des von Brunel et al. verwendeten Monomerengemischs aus ODA und BPADA bei 148 °C liegt und Brunel et al. somit die Polymerisationsreaktionen bei einer Temperatur durchgeführt haben, die um 52 °C über der T_{P} lag, und darüber hinaus die Reaktionen nach wenigen Minuten beendet haben, anstatt im Wesentlichen vollständigen Umsatz abzuwarten, wie dies die vorliegende Erfindung vorsieht.

Die vorliegende Erfindung ist dabei nicht auf die Verwendung von Diaminen und Dianhydriden als Monomere beschränkt, sondern es können auch höherwertige Amine und/oder Anhydride eingesetzt werden, wie z.B. Tri- oder auch Tetraamine oder -anhydride. Um vernetzte Polyimide zu erhalten, die sich zur Verwendung in eingangs erwähnten kovalenten organischen Netzwerken (COF) eignen (vgl. Fang et al., s.o.), sind höherwertige Monomere sogar erfindungsgemäß bevorzugt. Der Reaktionsmechanismus bei der Polykondensation höherwertiger Monomere oder von Gemischen aus zwei- und höherwertigen Monomeren und das Prinzip der Erfindung sind natürlich im Wesentlichen dieselben wie bei zweiwertigen Edukten, weswegen in den späteren Beispielen zu Illustrationszwecken Letztere zum Einsatz kommen. Dennoch sind in der Folge bei Erwähnung von "Diaminen", "Dianhydriden" und "Tetracarbonsäuren" auch höherwertige Monomere als implizit offenbart anzusehen, sofern der Kontext dies nicht ausschließt. Für den Erhalt im Wesentlichen reiner, hochkristalliner Produkte ist frelich in allen Fällen eine möglichst exakte Stöchiometrie der Monomerengemische entscheidend.

Vorzugsweise werden daher auch gemäß vorliegender Erfindung in einem Schitt a) vorausgehenden, zusätzlichen Schritt aus den Monomeren stöchiometrische Salze (Monomersalze, "AH-Salze") mit einem Molverhältnis zwischen Diamin und Dianhydrid von 1:1 gebildet, um den Anteil an nichtumgesetzten Monomeren in den Polyimiden möglichst gering zu halten. Bei Einsatz höherwertiger Monomere im Verfahren der vorliegenden Erfindung werden im diesem zusätzlichen, vorbereitenden Verfahrensschritt natürlich Salze mit anderen, der Wertigkeit der Monomere entsprechenden Molverhältnissen erhalten, also etwa mit einem Verhältnis von 3:2 bei Kombination von Diaminen mit Trianhydriden (oder umgekehrt Dianhydriden mit Triaminen) usw.

Das Lösungsmittel ist im Verfahren der Erfindung nur insofern eingeschränkt, als die Löslichkeit der Monomere bzw. des stöchiometrischen Salzes derselben darin ausreichend gering sein sollte und vor allem der Siedepunkt unterhalb der T_{P} der beiden Monomerkomponenten liegt. Im Hinblick auf die Kosten und etwaige Umweltbelastung wird jedoch vorzugsweise Wasser oder auch ein oder mehrere Alkohole oder ein Gemisch aus Wasser und Alkohol(en) als Lösungsmittel eingesetzt, insbesondere Wasser, so dass die vorliegende Erfindung in besonders bevorzugten Ausführungsformen ein Verfahren zur Hydrothermalsynthese von Polyimiden bereitstellt.

Als Monomerkomponente(n) wird/werden gemäß vorliegender Erfindung vorzugsweise ein aromatisches Diamin und/oder ein aromatisches Tetracarbonsäuredianhydrid eingesetzt. Noch bevorzugter sind beide Komponenten aromatisch, da dies einerseits die Steifigkeit der Polymerketten erhöht, was die Kristallisation begünstigt, und andererseits die Löslichkeit in den erfindungsgemäß bevorzugten Lösungsmitteln Wasser und Alkohol verringert. Insbesondere wird für die Zwecke der vorliegenden Erfindung als Monomer ein stöchiometrisches Salz eines aromatischen Diamins und eines aromatischen Tetracarbonsäuredianhydrids bzw. höherwertiger aromatischer Amine und Anhydride eingesetzt.

Da die Heizdauer bis zum Erreichen der Solvothermalbedingungen gemäß vorliegender Erfindung möglichst kurz sein sollte, damit währenddessen nur ein möglichst geringer Anteil der Monomerkomponenten in Lösung gehen kann, umfasst das Verfahren der Erfindung insbesondere gemäß Schritt a1) das getrennte Erhitzen des Lösungsmittels auf solvothermale Bedingungen und die erst darauf folgende Zugabe der Monomere zum heißen Lösungsmittel, da so ein In-Lösung-Gehen der Monomere vor dem Erreichen der solvothermalen Bedingungen gänzlich ausgeschlossen ist. Aufgrund des dadurch allerdings erhöhten apparativen Aufwands und der auch mit der Alternative gemäß Schritt a2) sehr guten erzielten Ergebnisse kann auch das möglichst rasche gemeinsame Erhitzen von Monomeren und Lösungsmittel in manchen Fällen gegenüber a1) bevorzugt sein.

Dabei umfasst "möglichst rasches gemeinsames Erhitzen" in bevorzugten Ausführungsformen den Einsatz von Mikrowellenstrahlung, da diese Vorgangsweise (wie eingangs erwähnt) inzwischen eine bewährte Technik in der organischen Synthese darstellt und daher gemäß vorliegender Erfindung besonders bevorzugt wird. Dem Fachmann ist jedoch klar, dass je nach Art der Reaktoren auch andere Arten des raschen Aufheizens von Reaktionsgemischen, wie z.B. optische Heizverfahren mittels Infrarot-Lasern oder dergleichen, zumindest vergleichbare Ergebnisse liefern werden und daher prinzipiell als gleichwertig zu Mikrowellenstrahlung anzusehen sind.

Welches Verfahren jeweils zum Einsatz kommt, hängt dabei maßgeblich von der Art der Monomere und der daraus resultierenden Neigung der Polyimide zur Kristallisation sowie der Löslichkeit der Monomere im Lösungsmittel ab. Sind die Monomere darin praktisch unlöslich, so kann bei ausreichend hoher Temperaturdifferenz zwischen dem Heizmedium und der gewünschten Lösungsmitteltemperatur während der Polymerisationsreaktion auch herkömmliches Aufheizen mittels (sehr heißer) Heizbäder oder Umluftöfen sehr gute Ergebnisse liefern. Vor allem, wenn z.B. aromatische oder andere Monomere mit hoher Steifigkeit der Molekülstruktur zum Einsatz kommen, wie die späteren Ausführungsbeispiele belegen. Allgemein ist jedoch, wie erwähnt, dafür zu sorgen, dass die Zeitspanne bis zum Erreichen der solvothermalen Bedingungen nicht mehr als 5 min, vorzugsweise nicht mehr als 3 min, noch bevorzugter nicht mehr als 2 min, insbesondere nicht mehr als 1 min, beträgt, wenn das Lösungsmittel in Schritt a2) gemeinsam mit den Monomeren erhitzt wird.

### KURZBESCHREIBUNG DER ZEICHNUNGEN

Nachstehend wird die vorliegende Erfindung unter Bezugnahme auf konkrete Ausführungsbeispiele und die beiliegenden Zeichnungen näher beschrieben, wovon Letztere Folgendes zeigen.
Fig. 1 ist die TGA-Kurve des Monomerengemischs gemäß Brunel et al. (s.o.).
Fig. 2 ist das XRD-Muster des in Beispiel 1 der Erfindung erhaltenen Polyimids.
Fig. 3 ist eine SEM-Aufnahme des Polyimids aus Beispiel 1 der Erfindung.
Fig. 4 ist das XRD-Muster des in Beispiel 3 der Erfindung erhaltenen Polyimids.
Fig. 5 ist eine SEM-Aufnahme des Polyimids aus Beispiel 3 der Erfindung.
Fig. 6 ist das XRD-Muster des in Beispiel 4 der Erfindung erhaltenen Polyimids.
Fig. 7 ist das XRD-Muster des in Beispiel 5 der Erfindung erhaltenen Polyimids.
Fig. 8 ist das XRD-Muster des in Beispiel 6 der Erfindung erhaltenen Polyimids.
Fig. 9 ist das XRD-Muster des in Beispiel 8 der Erfindung erhaltenen Polyimids.
Fig. 10 ist das XRD-Muster des in Beispiel 9 der Erfindung erhaltenen Polyimids.
Fig. 11 ist das XRD-Muster des in Beispiel 10 der Erfindung erhaltenen Polyimids.
Fig. 12 ist das XRD-Muster des in Beispiel 11 der Erfindung erhaltenen Polyimids.

### BEISPIELE

Alle für die folgenden Polyimid-Hydrothermalsynthesen eingesetzten Edukte wurden aus kommerzieller Quelle bezogen und ohne weitere Reinigung eingesetzt. Thermogravimetrische Analysen wurden auf einem TG 209 Analyzer von Netzsch und IR-Spektroskopie auf einem Tensor 27 von Bruker durchgeführt. Röntgenpulverdiffraktogramme wurden auf einem X'Pert Pro multi-purpose diffractometer von PANalytical aufgenommen, und Rasterelektronenmikroskopie auf einem 200F FEI von Quanta durchgeführt.

### Abkürzungen

- HT:: hydrothermal
- XRD:: Röntgendiffraktometrie
- IR:: Infrarotspektrometrie
- TGA:: Thermogravimetrieanalyse
- SEM:: Rasterelektronenmikroskopie
- PDA:: p-Phenylendiamin, 1,4-Diaminobenzol
- PMA:: Pyromellithsäure, Benzol-1,2,4,5-tetracarbonsäure
- PMDA:: Pyromellithsäuredianhydrid, Benzol-1,2,4,5-tetracarbonsäuredianhydrid
- PPPDI:: Poly(p-phenylenpyromellithsäurediimid)
- BTA:: Benzophenon-3,3',4,4'-tetracarbonsäure
- BTDA:: Benzophenon-3,3',4,4'-tetracarbonsäuredianhydrid
- PPBTDI:: Poly(p-phenylenbenzophenontetracarbonsäurediimid)
- Bz:: Benzidin, 4,4'-Diaminobiphenyl
- PBBTDI:: Poly(p-biphenylenbenzophenontetracarbonsäurediimid)
- TAPB: 1,3,5-Tris(4-aminophenyl)benzol
- PBTPPDI: Poly(benzoltri(p-phenylen)pyromellithsäurediimid)
- χ_{cr}:: Kristallinitätsgrad

### Beispiel 1 - Herstellung von Poly(p-phenylenpyromellithsäurediimid), PPPDI

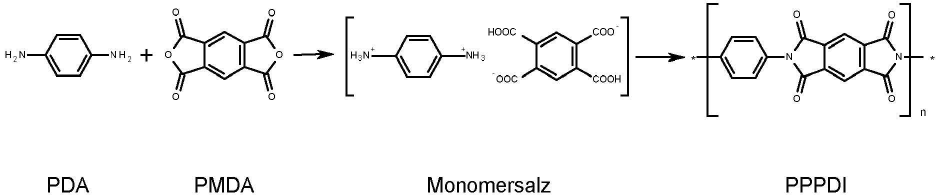

### a) Herstellung des Monomersalzes [H₂PDA²⁺PMA²⁻]

0,327 g PMDA wurden unter Inertatmosphäre in einem Dreihalskolben mit Rückflusskühler vorgelegt und in 15 ml dest. Wasser gelöst. Die Lösung wurde auf 80 °C erhitzt, und unter Rühren wurden 0,162 g PDA zugesetzt, wobei unmittelbar das Monomersalz als weißes Pulver ausfiel. Es wurde 2 h lang weitergerührt, wonach das Salz abfiltriert und im Vakuum getrocknet wurde. TGA des trockenen Monomersalzes ergab eine Polymerisationstemperatur T_{P} im festen Zustand von 205 °C.

### b) HT-Polymerisation

Das Monomersalz wurde in 15 ml dest. Wasser dispergiert, in einen nichtgerührten Autoklaven eingebracht und innerhalb von 4,5 min auf HT-Bedingungen und schließlich auf 200 °C erhitzt. Nach 1 h bei dieser Reaktionstemperatur wurde der Autoklav rasch auf Raumtemperatur abgekühlt, und das gebildete PPPDI wurde abfiltriert, mit destilliertem Wasser gewaschen und im Vakuum bei 40 °C über Nacht getocknet.

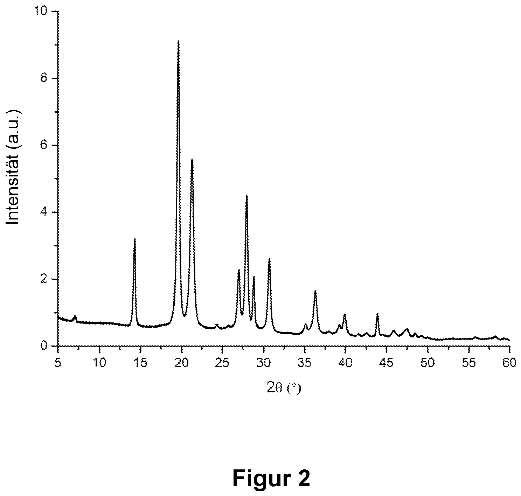

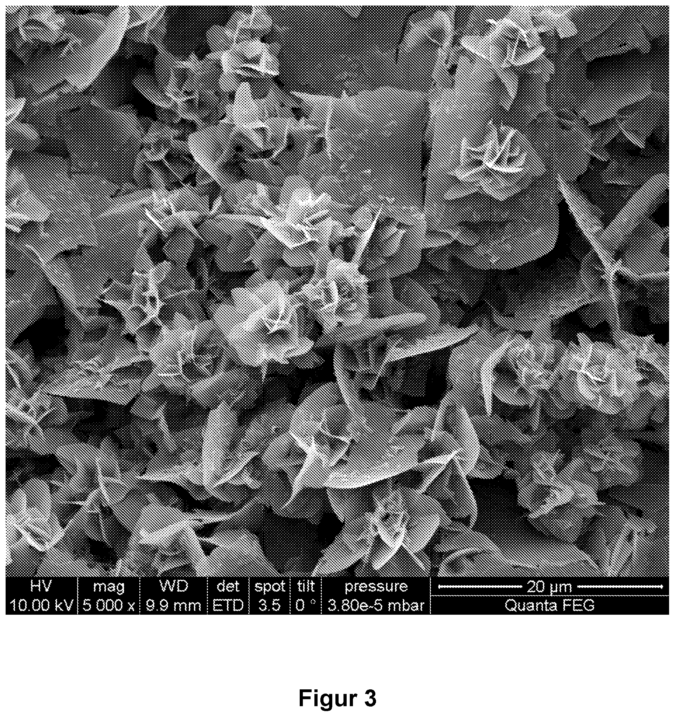

Das PPPDI war orangefarben und vollständig imidiert, wie mittels FT-ATR-IR festgestellt wurde (1783 cm⁻¹ (C=O Imid); 1709 cm⁻¹ (C=O Imid); 1365 cm⁻¹ (C-N)), wobei keinerlei Schwingungen der Monomere oder des Monomersalzes erkennbar waren. Mittels Pulver-XRD wurde vollständige Kristallinität des Produkts, das in Form von zwei festen kristallinen Phasen vorlag, d.h. keine amorphen Anteile festgestellt. Der Kristallinitätsgrad χ_{cr} lag somit bei > 99 %. Fig. 2 zeigt das XRD-Muster des erhaltenen Polyimids. SEM zeigte eine äußerst homogene, geordnete Morphologie des erhaltenen PPPDI, was ein weiterer Beleg für den extrem hohen Kristallinitätsgrad ist. Fig. 3 zeigt die SEM-Aufnahme des Polyimids.

### Beispiel 2 - Herstellung von PPPDI in größerem Maßstab

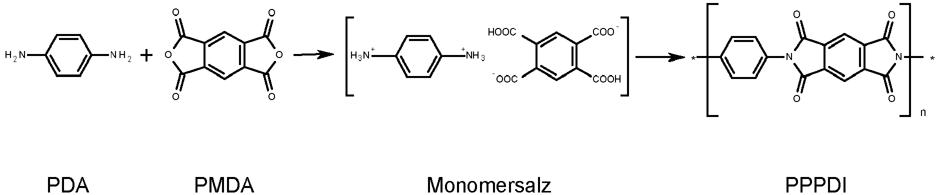

Die Vorgangsweise aus Beispiel 1 wurde im Wesentlichen wiederholt, wobei allerdings das Monomersalz aus 8,72 g PMDA und 4,33 g PDA in 400 destilliertem Wasser gebildet wurde. Dieses Monomersalz (T_{P} 205 °C) wurde in der Folge in einem Rührreaktor im Autoklaven binnen 4 min auf HT-Bedingungen und schließlich ebenfalls auf 200 °C erhitzt und das Produkt wie in Beispiel 1 isoliert und getrocknet. Die mittels IR und XRD bestimmte Reinheit und Kristallinität dieses PPPDI stimmten mit dem Produkt aus Beispiel 1 überein: χ_{cr} > 99 %.

Ohne sich auf eine Theorie festlegen zu wollen, wird angenommen, dass für diesen hohen Grad der Kristallinität des erhaltenen PPPDI neben der geringen Wasserlöslichkeit der Monomere die hohe Steifigkeit des erhaltenen Polyimds ausschlaggebend ist, da die Grundeinheiten im Polymermolekül aufgrund von Mesomerieeffekten größtenteils planar angeordnet sind.

### Beispiel 3 - Herstellung von Poly(p-phenylenbenzophenontetracarbonsäurediimid), PPBTDI

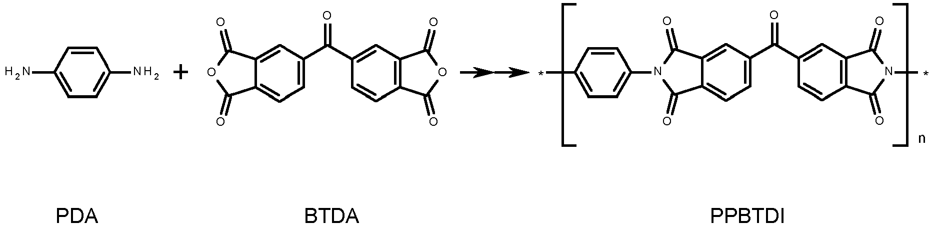

Analog zur Vorgangsweise aus Beispiel 1 wurden 0,48 g (1,5 mmol) BTDA in 15 ml dest. Wasser mit 0,11 g PDA unter Rühren - allerdings bei Raumtemperatur - zum Monomersalz [H₂PDA²⁺BTA²⁻] umgesetzt, dessen T_{P} mittels TGA mit 149 °C bestimmt wurde und das anschließend im Autoklaven in 15 ml Wasser ohne Rühren binnen 5 min auf HT-Bedingungen und schließlich auf 140 °C erhitzt und danach 12 h lang zum Polyimid PPBTI polykondensiert wurde.

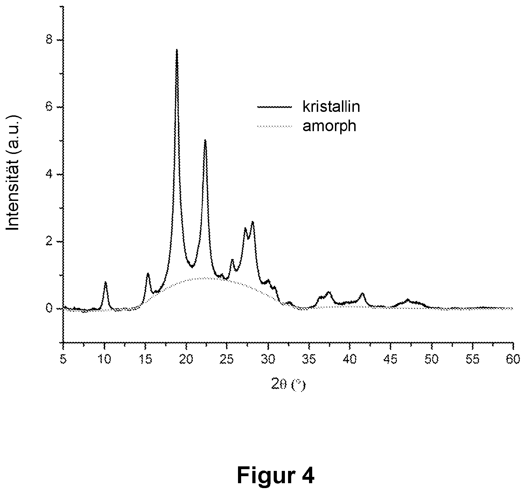

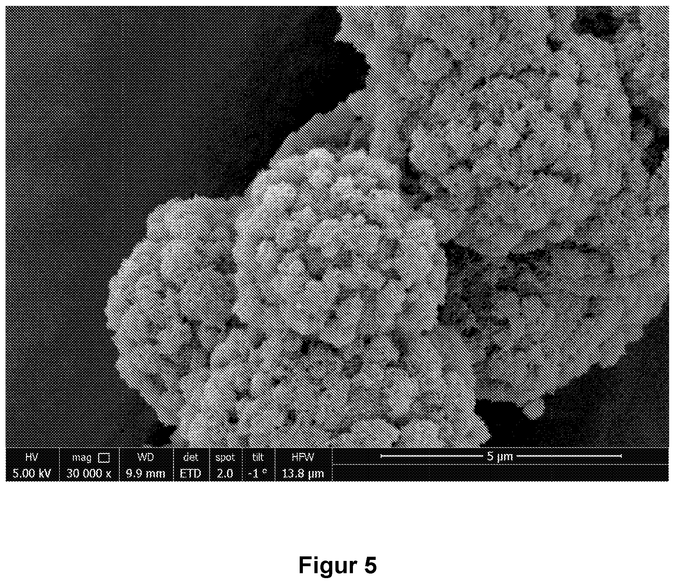

IR der bräunlichen Kristalle zeigte die vollständige Imidierung (1781 cm⁻¹ (C=O Imid); 1717 cm⁻¹ (C=O Imid); 1378 cm⁻¹ (C-N)), da erneut keinerlei Schwingungen der Monomere oder des Monomersalzes erkennbar waren. Die Kristallinität wurde mittels Pulver-XRD untersucht. Fig. 4 zeigt das XRD-Muster des PPBTDI, wobei die Kurve der kristallinen Peaks mit einer Gaußkurve unterlegt ist, die näherungsweise den Anteil an amorphen Strukturen wiedergibt. Aus den Flächen unter den beiden Kurven ergab sich ein rechnerischer Kristallinitätsgrad χ_{cr} von etwa 62 %. Die in Fig. 5 dargestellte SEM-Aufnahme des Polyimids zeigte aber dennoch eine stark geordnete Morphologie des erhaltenen PPBTDI.

### Beispiel 4 - Herstellung von Poly(p-biphenylenbenzophenontetracarbonsäurediimid), PBBTDI

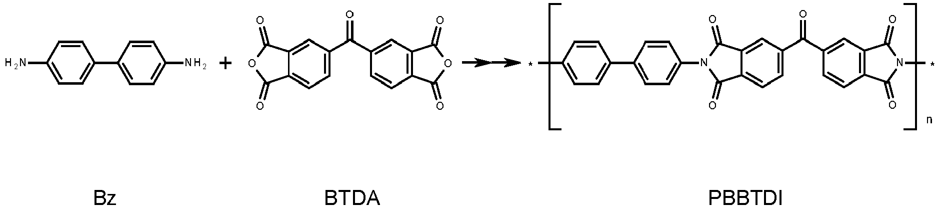

Analog zur Vorgangsweise aus Beispiel 3 wurden 0,48 g (1,5 mmol) BTDA in 15 ml dest. Wasser mit 0,22 g Bz unter Rühren zum Monomersalz [H₂Bz²⁺BTA²⁻] umgesetzt, dessen T_{P} mittels TGA mit 172 °C bestimmt wurde und das anschließend im nichtgerührten Autoklaven in 15 ml Wasser binnen 4,5 min auf HT-Bedingungen und schließlich auf 160 °C erhitzt und danach 12 h lang zum Polyimid PBBTDI polykondensiert wurde.

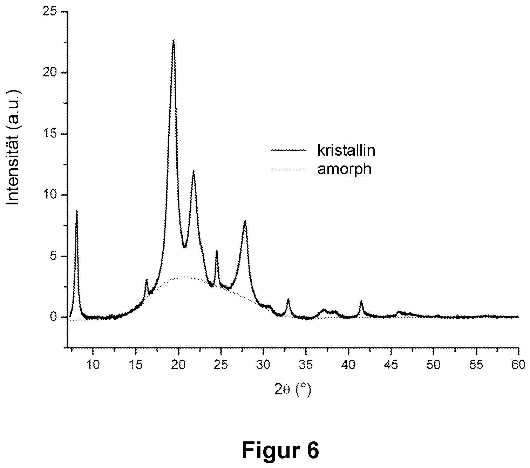

IR der bräunlichen Kristalle zeigte wiederum vollständige Imidierung (1786 cm⁻¹ (C=O Imid); 1709 cm⁻¹ (C=O Imid); 1389 cm⁻¹ (C-N)), da auch hier keinerlei Schwingungen der Monomere oder des Monomersalzes erkennbar waren. Die Kristallinität wurde mittels Pulver-XRD untersucht. Fig. 6 zeigt das XRD-Muster des PBBTDI, wobei erneut aus den Flächen unter der Kurve der kristallinen Peaks und unter der darunter gelegten Gaußkurve für die amorphen Anteile der Kristallinitätsgrad berechnet wurde, was ein χ_{cr} von etwa 61 % ergab.

Die deutlich niedrigere Kristallinität des PPBTDI aus Beispiel 3 und des PBBTDI aus Beispiel 4 gegenüber dem PPPDI aus den Beispielen 1 und 2 wird - ohne sich auf eine bestimmte Theorie festlegen zu wollen - der höheren Wasserlöslichkeit der Benzophenontetracarbonsäure BTA zugeschrieben.

### Beispiel 5 - Herstellung von PPBTDI unter Einsatz von Mikrowellenstrahlung

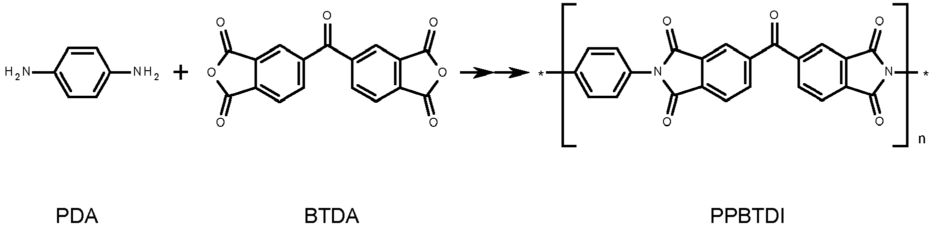

Beispiel 3 wurde im Wesentlichen wiederholt, wobei jedoch das Erhitzen mittels Mikrowellenstrahlung erfolgte, so dass die hydrothermalen Bedingungen bereits nach weniger als 2 min erreicht waren, und die Polymerisationsreaktion bereits nach nur 1 h im Wesentlichen abgeschlossen war.

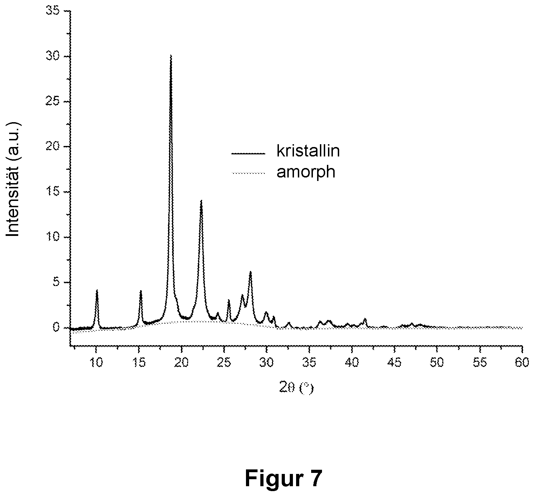

Mittels IR wurde auch in diesem Fall vollständige Imidierung festgestellt, und in Fig. 7 ist das Pulver-XRD-Muster des erhaltenen, getrockneten PPBTDI dargestellt. Aus den Flächen unter der Kurve der kristallinen Peaks und der unterlegten Gaußkurve ergibt sich ein Kristallinitätsgrad χ_{cr} von etwa 93 %, was somit um ganze 31 Prozentpunkte über den 62 % des Produkts aus Beispiel 3 lag. Das deutlich raschere Erhitzen mittels Mikrowellen - 2 min in Beispiel 5 anstelle von 4 min in Beispiel 3 - bewirkte folglich einen erheblichen Anstieg der Kristallinität um 50 %, da so offenbar noch geringere Anteile des Monomersalzes in Lösung gehen konnten, bevor HT-Bedingungen erreicht waren.

### Beispiel 6 - Herstellung von PBBTDI unter Einsatz von Mikrowellenstrahlung

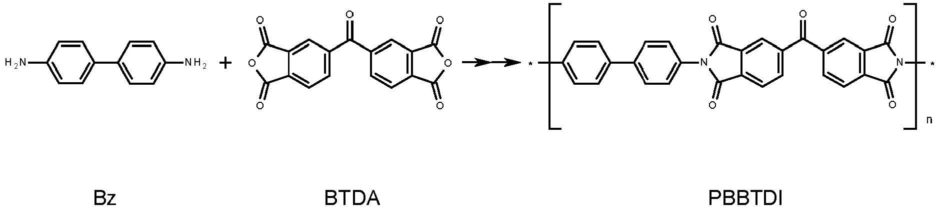

Beispiel 4 wurde im Wesentlichen wiederholt, wobei jedoch das Erhitzen mittels Mikrowellenstrahlung erfolgte, so dass die hydrothermalen Bedingungen bereits nach weniger als 2 min erreicht waren, und die Polymerisationsreaktion bereits nach nur 1 h im Wesentlichen abgeschlossen war.

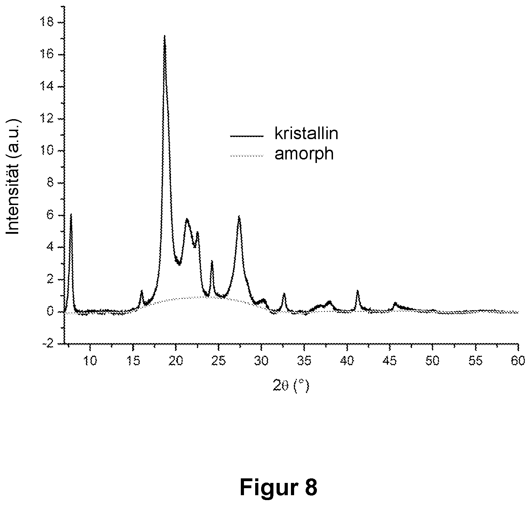

Mittels IR wurde auch in diesem Fall vollständige Imidierung festgestellt, und in Fig. 8 ist das Pulver-XRD-Muster des erhaltenen, getrockneten PBBTDI dargestellt. Aus den Flächen unter der Kurve der kristallinen Peaks und der unterlegten Gaußkurve ergibt sich ein Kristallinitätsgrad χ_{cr} von etwa 80 %, was somit um ganze 19 Prozentpunkte über den 61 % des Produkts aus Beispiel 4 lag. Das deutlich raschere Erhitzen mittels Mikrowellen - 2 min in Beispiel 6 anstelle von 4,5 min in Beispiel 4 - bewirkte folglich einen erheblichen Anstieg der Kristallinität um rund 30 %, da so offenbar noch geringere Anteile des Monomersalzes in Lösung gehen konnten, bevor HT-Bedingungen erreicht waren.

### Beispiel 7 - Herstellung von PPPDI in Ethanol

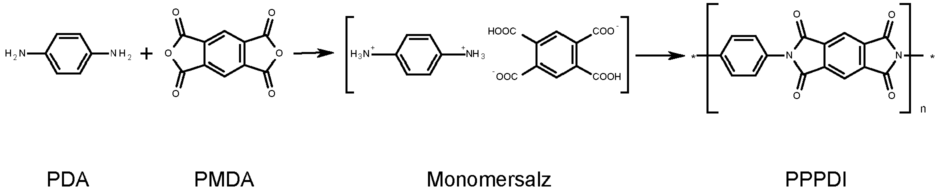

Beispiel 2 wurde im Wesentlichen wiederholt, außer dass das Monomersalz zur Polymerisation anstatt in Wasser in 400 ml Ethanol suspendiert wurde. Die Reaktion (nach Erhitzen binnen 4,5 min auf HT-Bedingungen und schließlich auf 200 °C) und Aufarbeitung erfolgten ebenfalls analog zu Beispiel 2.

Vollständige Imidierung wurde auch in diesem Fall mittels IR konstatiert, und das Pulver-XRD-Muster entsprach nahezu exakt jenem aus Beispiel 1 (siehe Fig. 2). Somit konnte belegt werden, dass die Polykondensation von PDA und PMDA zu einem hochkristallinen Polyimid auch in einem anderen protischen Lösungsmittel als Wasser mit demselben ausgezeichneten Erfolg durchgeführt werden kann.

### Beispiel 8 - Herstellung des vernetzten Polyimids Poly(benzoltri(p-phenylen)-pyromellithsäurediimid), PBTPPDI, unter Einsatz von Mikrowellenstrahlung

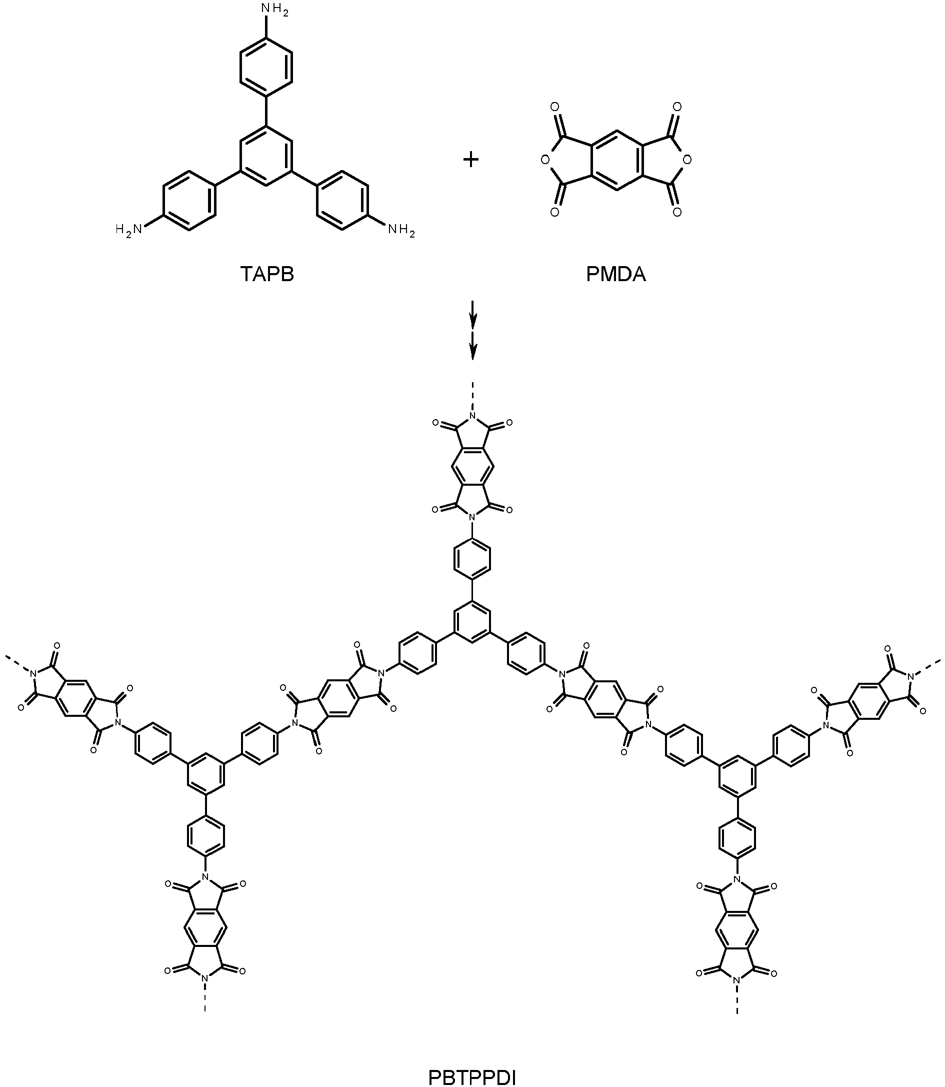

Die Vorgangsweise aus Beispiel 3 wurde im Wesentlichen wiederholt, wobei allerdings 0,06 g (0,3 mmol) PMDA mit 0,07 g (0,2 mmol) TAPB zum Monomersalz [(H₃TAPB³⁺)₂(PMA²⁻)₃] umgesetzt wurden, dessen T_{P} mittels TGA mit 152 °C bestimmt wurde und das anschließend im nichtgerührten Autoklaven in 15 ml Wasser mittels Mikrowellen binnen 2 min auf HT-Bedingungen und schließlich auf 140 °C erhitzt und danach 12 h lang zum Polyimid PBTPPDI polykondensiert wurde.

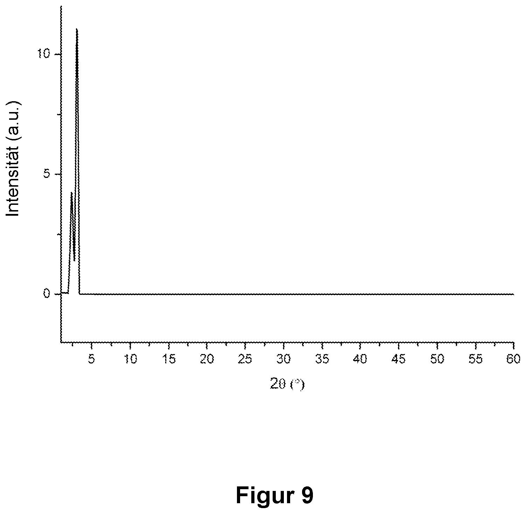

IR der getrockneten braunen Kristalle zeigte wiederum vollständige Imidierung (1785 cm⁻¹ (C=O Imid); 1723 cm⁻¹ (C=O Imid); 1390 cm⁻¹ (C-N)), da auch hier keinerlei Schwingungen der Monomere oder des Monomersalzes erkennbar waren. Die Kristallinität wurde mittels Pulver-XRD untersucht. Fig. 9 zeigt das XRD-Muster des PBTPPDI, in dem keinerlei amorphe Anteile zu erkennen sind, woraus ein Kristallinitätsgrad χ_{cr} von > 99 % folgt.

### Beispiel 9 - Herstellung von PPPDI durch Injektion der Monomere in getrennt erhitztes Lösungsmittel

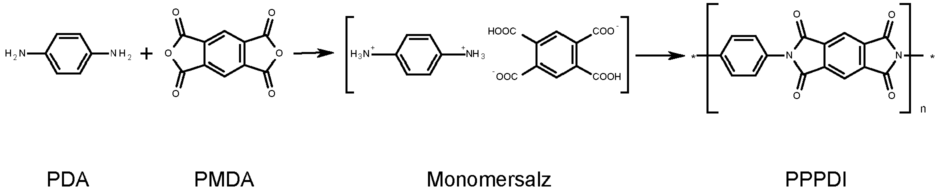

Das Monomersalz wurde gemäß Beispiel 1a), allerdings in 10fachem Ansatz hergestellt. Das so erhaltene Salz wurde in 100 ml dest. Wasser dispergiert, und die Dispersion wurde in eine Hochdruck-Stahlpipette übergeführt, die mit einem mit Rührer ausgestatteten 1-I-Stahlreaktor verbunden wurde, allerdings durch ein Ventil von der Reaktionskammer getrennt war, in der 400 ml dest. Wasser vorgelegt wurden. Die Apparatur wurde in einen Autoklaven gestellt und das Wasser in der Reaktionskammer unter dem entsprechenden autogenen Druck auf 200 °C erhitzt. Nach Erreichen dieser Reaktionstemperatur wurde das Ventil geöffnet, und die Monomerdispersion wurde mittels Inertgasdruck in weniger als 30 s in das vorerhitzte Lösungsmittel eingespritzt. Anschließend wurde das Reaktionsgemisch 1 h lang bei 200 °C gerührt, wonach vollständiger Umsatz festgestellt und das Produkt wie in Beispiel 1 isoliert und getrocknet wurde.

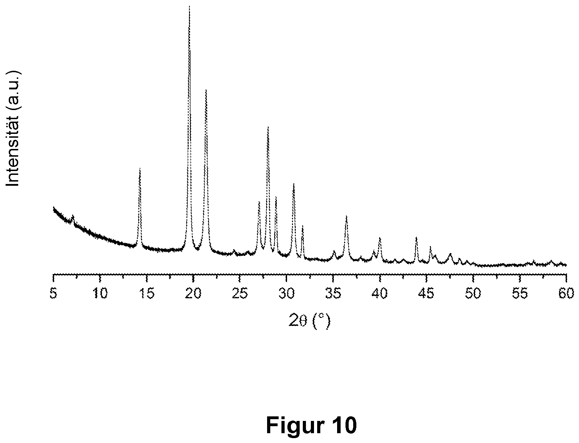

Die mittels IR und XRD bestimmte Reinheit und Kristallinität dieses PPPDI stimmten mit dem Produkt aus Beispiel 1 überein (das XRD-Muster ist in Fig. 10 dargestellt). Es waren keinerlei Schwingungen der Monomere oder des Monomersalzes sowie keinerlei amorphen Anteile erkennbar, so dass ein Kristallinitätsgrad χ_{cr} von nahezu 100 % festgestellt wurde.

### Beispiel 10 - Herstellung von PPBTDI durch Injektion der Monomere in getrennt erhitztes Lösungsmittel

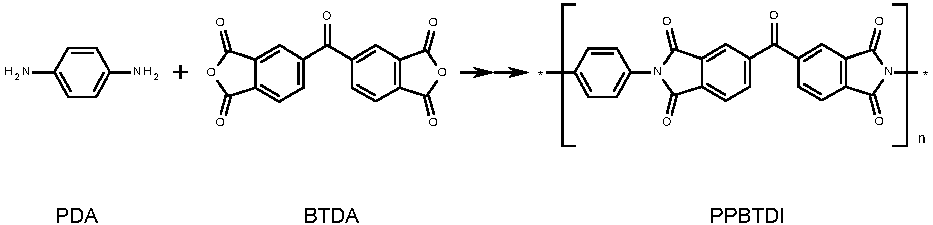

Analog zur Vorgangsweise aus Beispiel 9 wurde die Reaktion von PDA mit BTDA im zehnfachem Ansatz der Beispiele 3 und 5 durchgeführt, wobei allerdings nach dem Einspritzen der Monomerdispersion in das vorerhitzte Lösungsmittel das Reaktionsgemisch 4 h lang bei 200 °C gerührt wurde, um vollständigen Umsatz zu gewährleisten.

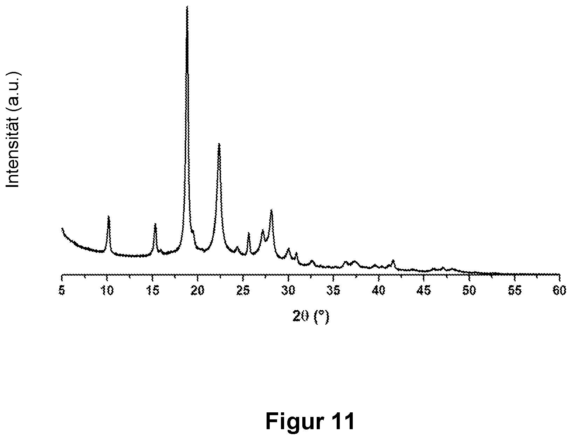

Die IR- und XRD-Peaks des erhaltenen PPBTDI stimmten mit jenen der Beispiele 3 und 5 überein, wobei jedoch im vorliegenden Fall praktisch keine amorphen Anteile feststellbar waren, was ein χ_{cr} > 99 % ergab. Das zugehörige XRD-Muster wird in Fig. 11 gezeigt. Das nach getrenntem Vorerhitzen des Lösungsmittels erhaltene Produkt war somit noch deutlich reiner als jenes aus Beispiel 5, da praktisch keine Monomere in Lösung gegangen waren.

### Beispiel 11 - Herstellung von PBBTDI durch Injektion der Monomere in getrennt erhitztes Lösungsmittel

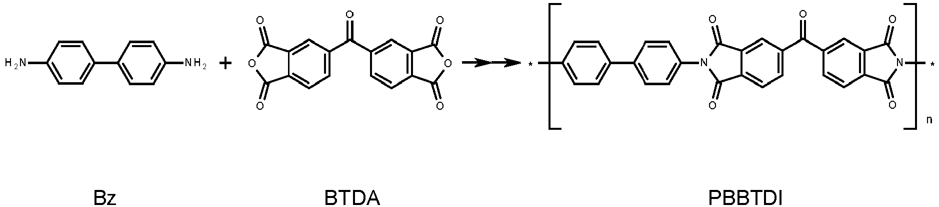

Analog zur Vorgangsweise aus Beispiel 9 wurde die Reaktion von Bz mit BTDA im zehnfachem Ansatz der Beispiele 4 und 6 durchgeführt, wobei allerdings nach dem Einspritzen der Monomerdispersion in das vorerhitzte Lösungsmittel das Reaktionsgemisch 4 h lang bei 200 °C gerührt wurde, um vollständigen Umsatz zu gewährleisten.

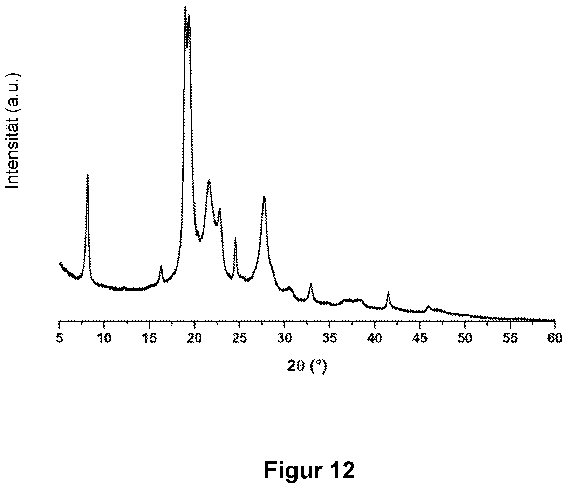

Die IR- und XRD-Peaks des erhaltenen PPBTDI stimmten mit jenen der Beispiele 4 und 6 überein, wobei jedoch im vorliegenden Fall noch weniger amorphe Anteile feststellbar waren, wobei näherungsweise ein χ_{cr} > 90 % ermittelt wurde. Das zugehörige XRD-Muster wird in Fig. 12 gezeigt. Das nach getrenntem Vorerhitzen des Lösungsmittels erhaltene Produkt war somit noch deutlich reiner als jenes aus Beispiel 6, da praktisch keine Monomere in Lösung gegangen waren, wodurch die Kristallinität gegenüber Beispiel 6 um zumindest weitere 10 Prozentpunkte gesteigert werden konnte.

Zusammenfassend belegen die Ergebnisse der obigen Beispiele, wie in der nachstehenden Tabelle 1 aufgelistet, die ausgezeichnete Kristallinität der gemäß vorliegender Erfindung hergestellten Polyimide, die durch eine Erhöhung der Heizrate mittels Mikrowellenstrahlung sowie durch getrenntes Vorerhitzen des Lösungsmittels noch gesteigert werden kann. Für Strukturen mit äußerst geringer Wasserlöslichkeit reicht jedoch Erhitzen mittels Heizbad oder Umluft aus, um hervorragende Kristallinitätsgrade zu erzielen.

**Tabelle 1**

| **Beispiel** | **Polyimid** | **T_{P} Monomersalz (°C)** | **T_{R} (°C)** | **MW** | **GE** | **Zeit bis HT (min)** | **Lösungsmittel** | **χ_{cr} (%)** |
|---|---|---|---|---|---|---|---|---|
| 1 | PPPDI | 205 | 200 | nein | nein | < 4,5 | H₂O | > 99 |
| 2 | PPPDI | 205 | 200 | nein | nein | < 4 | H₂O | > 99 |
| 3 | PPBTDI | 149 | 140 | nein | nein | < 5 | H₂O | 62 |
| 4 | PBBTDI | 172 | 160 | nein | nein | < 4,5 | H₂O | 61 |
| 5 | PPBTDI | 149 | 140 | ja | nein | < 2 | H₂O | 93 |
| 6 | PBBTDI | 172 | 160 | ja | nein | < 2 | H₂O | 80 |
| 7 | PPPDI | 205 | 200 | nein | nein | < 4,5 | EtOH | > 99 |
| 8 | PBTPPDI | 152 | 140 | ja | nein | < 2 | H₂O | > 99 |
| 9 | PPPDI | 205 | 200 | nein | ja | < 0,5 | H₂O | > 99 |
| 10 | PPBTDI | 149 | 200 | nein | ja | < 0,5 | H₂O | > 99 |
| 11 | PBBTDI | 172 | 200 | nein | ja | < 0,5 | H₂O | > 90 |

| | | | | | | | | |
|---|---|---|---|---|---|---|---|---|
| T_{P}: Polymerisationstemperatur im festen Zustand T_{R}: Reaktionstemperatur MW: Mikrowellen GE: getrenntes Erhitzen des Lösungsmittels | | | | | | | | |

Die Vorteile bevorzugter Ausführungsformen des erfindungsgemäßen Verfahrens treten speziell bei Vergleichen der Beispiele 1, 2 und 9 zur Herstellung von PPPDI, der Beispiele 3, 5 und 10 zur Herstellung von PPBTDI bzw. de Beispiele 4, 6 und 11 zur Herstellung von PBBTDI zutage. Rasches Erhitzen mittels Mikrowelle verbessert die Kristallinität gegenüber herkömmlicher Beheizung der Reaktionsgemische deutlich. Diese kann jedoch durch getrenntes Vorerhitzen des Lösungsmittels auf solvothermale Bedingungen und erst darauf folgende Zugabe des Monomersalzes noch weiter gesteigert werden, da auf diese Weise praktisch keinerlei Monomere in Lösung gehen können, bevor die Polymerisationstemperatur erreicht ist.

In letzterem Fall braucht die Reaktionstemperatur daher auch nicht unterhalb der Polymerisationstemperatur T_{P} der Monomere in festem Zustand gehalten zu werden, obwohl dies in bestimmten Fällen dennoch bevorzugt sein kann.

Die Erfindung stellt somit ein verbessertes Verfahren zur Herstellung von Polyimiden mittels Solvothermalsynthese bereit, das Produkte mit deutlich höherer Kristallinität bereitstellt als dies nach dem Stand der Technik möglich war.

## Patentansprüche

1. Verfahren zur Solvothermalsynthese von Polyimiden durch Lösungspolymerisation von Monomeren in einem geeigneten Lösungsmittel durch Vermischen des Lösungsmittels und der Monomere und Erhitzen des Gemischs unter Druck auf Temperaturen über dem jeweiligen Siedepunkt bei Normaldruck,
**dadurch gekennzeichnet, dass**
kristalline Polyimide hergestellt werden, indem
a) das Vermischen und Erhitzen des Lösungsmittels und der Monomere erfolgt, indem entweder
a1) das Lösungsmittel auf solvothermale Bedingungen erhitzt wird, wonach erst die Monomere zugesetzt werden, um die Reaktion in Gang zu setzen, oder
a2) die Monomere mit dem Lösungsmittel vermischt werden und das Gemisch innerhalb von 5 min auf solvothermale Bedingungen erhitzt wird, wobei die Reaktionstemperatur T_{R} während der Polymerisation unter der Polymerisationstemperatur T_{P} der Monomere in festem Zustand gehalten wird; und
b) die Lösungspolymerisation durchgeführt wird, bis im Wesentlichen vollständiger Umsatz erreicht wurde.

2. Verfahren nach Anspruch 1, **dadurch gekennzeichnet, dass** das Gemisch aus Monomeren und Lösungsmittel in Schritt a2) innerhalb von 3 min, vorzugsweise innerhalb von 2 min, insbesondere innerhalb 1 min, auf solvothermale Bedingungen erhitzt wird.

3. Verfahren nach Anspruch 2, **dadurch gekennzeichnet, dass** das Gemisch aus Monomeren und Lösungsmittel in Schritt a2) mittels Mikrowellenstrahlung erhitzt wird.

4. Verfahren nach einem der Ansprüche 1 bis 3, **dadurch gekennzeichnet, dass** in einem Schitt a) vorausgehenden, zusätzlichen Schritt aus den Monomeren stöchiometrische Salze in einem Molverhältnis zwischen Diamin und Dianhydrid von 1:1 gebildet werden.

5. Verfahren nach einem der vorangegangenen Ansprüche, **dadurch gekennzeichnet, dass** die Reaktionstemperatur T_{R} auf zumindest 5 °C, vorzugsweise zumindest 10 °C, unter der Polymerisationstemperatur T_{P} der Monomere in festem Zustand gehalten wird.

6. Verfahren nach einem der vorangegangenen Ansprüche, **dadurch gekennzeichnet, dass** als Lösungsmittel Wasser, ein oder mehrere Alkohole oder ein Gemisch aus Wasser und Alkohol(en) eingesetzt wird.

7. Verfahren nach einem der vorangegangenen Ansprüche, **dadurch gekennzeichnet, dass** als Monomerkomponente(n) ein aromatisches Diamin und/oder ein aromatisches Tetracarbonsäuredianhydrid eingesetzt wird/werden.

8. Verfahren nach Anspruch 7, **dadurch gekennzeichnet, dass** als Monomer ein stöchiometrisches Salz eines aromatischen Di- oder Triamins und eines aromatischen Tetracarbonsäuredianhydrids eingesetzt wird.

9. Verfahren nach einem der vorangegangenen Ansprüche, **dadurch gekennzeichnet, dass** im Wesentlichen vollständig kristalline Polyimide hergestellt werden.

## Claims

1. A solvothermal synthesis process for polyimides using solution polymerization of monomers in an appropriate solvent by mixing the solvent and the monomers and heating the mixture under pressure at temperatures exceeding the respective boiling point at normal pressure, **characterized in that**
crystalline polyimides are produced by
a) mixing and heating the solvent and the monomers by either
a1) heating the solvent up to solvothermal conditions and subsequently adding the monomers to initiate the reaction, or
a2) mixing the monomers with the solvent and heating the mixture up to solvothermal conditions within a period of 5 min, the reaction temperature T_{R} being held below the polymerization temperature or the solid-state polymerization temperature T_{P} of the monomers during the polymerization; and
b) carrying out the solution polymerization until essentially complete conversion is achieved.

2. The process according to claim 1, **characterized in that** said mixture of monomers and solvent in step a2) is heated up to solvothermal conditions within 3 min, preferably within 2 min, in particular within 1 min.

3. The process according to claim 2, **characterized in that** said mixture of monomers and solvent in step a2) is heated using microwave radiation.

4. The process according to any one of the claims 1 to 3, **characterized in that**, in an additional step preceding step a), stoichiometric salts are formed from the monomers, having a molar ratio between diamine and di-anhydride of 1:1.

5. The process according to any one of the preceding claims, **characterized in that** the reaction temperature T_{R} is kept at least 5°C, preferably at least 10°C, below the solid-state polymerization temperature Tp of the monomers.

6. The process according to any one of the preceding claims, **characterized in that** water, one or several alcohols, or a mixture of water and alcohol(s) is used as the solvent.

7. The process according to any one of the preceding claims, **characterized in that** an aromatic diamine and/or an aromatic tetracarboxylic di-anhydride is/are used as monomeric component(s).

8. The process according to claim 7, **characterized in that** a stoichiometric salt of an aromatic di- or triamine and an aromatic tetracarboxylic di-anhydride is used as the monomer.

9. The process according to any one of the preceding claims, **characterized in that** essentially completely crystalline polyimides are prepared.

## Revendications

1. Procédé de synthèse solvothermique de polyimides utilisant la polymérisation en solution de monomères dans un solvant approprié en mélangeant le solvant et les monomères et en chauffant le mélange sous pression à des températures dépassant le point d'ébullition respectif à pression normale, **caractérisé en ce que** des polyimides cristallins sont produits
a) en mélangeant et en chauffant le solvant et les monomères soit
a1) en chauffant le solvant jusqu'à des conditions solvothermiques et en ajoutant ensuite les monomères pour initier la réaction, soit
a2) en mélangeant les monomères et le solvant et en chauffant le mélange jusqu'à des conditions solvothermiques dans une période de 5 minutes, la température de réaction T_{R} étant maintenue en dessous de la température de polymérisation T_{P} des monomères à l'état solide pendant la polymérisation ; et
b) en effectuant la polymérisation en solution jusqu'à ce qu'une conversion essentiellement complète soit obtenue.

2. Procédé selon la revendication 1, **caractérisé en ce que** ledit mélange de monomères et de solvant dans l'étape a2) est chauffé jusqu'aux conditions solvothermiques dans les 3 minutes, de préférence dans les 2 minutes, en particulier dans 1 minute.

3. Procédé selon la revendication 2, **caractérisé en ce que** ledit mélange de monomères et de solvant dans l'étape a2) est chauffé en utilisant des rayonnements micro-ondes.

4. Procédé selon l'une quelconque des revendications 1 à 3, **caractérisé en ce que**, dans une étape supplémentaire précédant l'étape a), des sels stœchiométriques sont formés à partir des monomères, présentant un rapport molaire entre la diamine et le di-anhydride de 1:1.

5. Procédé selon l'une quelconque des revendications précédentes, **caractérisé en ce que** la température de réaction T_{R} est maintenue au moins 5°C, de préférence au moins 10°C, en dessous de la température de polymérisation T_{P} des monomères à l'état solide.

6. Le procédé selon l'une quelconque des revendications précédentes, **caractérisé en ce que** de l'eau, un ou plusieurs alcools, ou un mélange d'eau et d'alcool(s) est utilisé comme solvant.

7. Procédé selon l'une quelconque des revendications précédentes, **caractérisé en ce qu'**une diamine aromatique et/ou un di-anhydride tétracarboxylique aromatique est/sont utilisés comme composant(s) monomérique(s).

8. Procédé selon la revendication 7, **caractérisé en ce qu'**un sel stœchiométrique d'une di- ou triamine aromatique et d'un di-anhydride tétracarboxylique aromatique est utilisé comme monomère.

9. Le procédé selon l'une quelconque des revendications précédentes, **caractérisé en ce que** des polyimides essentiellement complètement cristallins sont produits.
